# EUROPÄISCHE PATENTSCHRIFT

(11) **EP 1 281 057 B1**
(45) Veröffentlichungstag und Bekanntmachung des Hinweises auf die Patenterteilung: **07.09.2005**
(21) Anmeldenummer: 01947244.8
(22) Anmeldetag: 27.04.2001
(51) Int. Cl.: G01M 17/007

(54) **ELEKTRONISCHES STABILITÄTS PROGRAMM ( ESP ) RÜTTEL ROLLEN PRÜFSTAND**
Electronic stability program (ESP) rattle roller test bench
Programme électronique de stabilité (ESP) pour banc d'essai vibratoire à rouleaux

(30) Priorität: 08.05.2000 DE 10022355
(43) Veröffentlichungstag der Anmeldung: 05.02.2003
(73) Patentinhaber: AUDI AG, 85045 Ingolstadt (DE)
(72) Erfinder: KNUPFER, Götz, 85088 Vohburg (DE); FLAIG, Bernhard, 85114 Buxheim (DE); SEYBERTH, Karl, 91171 Greding-Kaising (DE); WITTIG, Gero, 85057 Ingolstadt (DE)
(74) Vertreter: Geissler, Manfred
(86) Internationale Anmeldenummer: PCT/EP2001/004753
(87) Internationale Veröffentlichungsnummer: WO 2001/086245

(56) Entgegenhaltungen:
- DE-A- 3 744 631
- DE-A- 3 941 685
- DE-A- 19 953 256
- DE-U- 29 920 168
- US-A- 3 837 221

## Beschreibung

Die Erfindung betrifft einen ESP-Rüttel- Rollenprüfstand.

Ein allgemein bekannter Rollenprüfstand besteht aus einem Prüfstandsgestell mit Anfahrflächen zu drehbaren Scheitelrollen an zwei beabstandeten parallelen Rollenachsen als Aufstandsflächen für entsprechend drehende Räder eines zu prüfenden, mit einem Elektronischen Stabilitäts Programm ausgerüsteten Kraftfahrzeugs. Zur Durchführung einer Rüttelprüfung sind an den Umfangsflächen der Scheitelrollen Profile zur Simulation einer Schlechtwegstrecke angebracht.

Bei solchen Rüttelprüfständen ist es konkret bekannt ein Fahrzeug auf vier Scheitelrollen zu fahren, die mit Profilen/Schlagleisten unterschiedlicher Höhe versehen sind und somit einen Kopfsteinpflaster-Straßenbelag nachbilden. Zur Erzeugung verschiedener Frequenzen wird das Fahrzeug mit Geschwindigkeiten bis ca. 30 km/h gefahren. Die Amplitude der Anregung wird durch unterschiedlich hohe aufeinanderfolgende Profile auf den Scheitelrollen festgelegt. Um unterschiedlich schlechte Straßenzustände zu simulieren, ohne die Scheitelrollen umzubauen, werden relativ breite Scheitelrollen verwendet mit über die Breite der Rollen unterschiedlich gestalteten Profilen. Durch leichte Lenkradbewegungen kann ein Fahrzeug "schwimmend" zu unterschiedlichen Rollenbereichen von links nach rechts bewegt werden.

Eine solche Rüttelprüfung ergibt im Wesentlichen folgende an sich bekannte Vorteile:
- Schlechte/lose elektrische Steckverbindungen können sich durch die Fahrzeugerschüttung lösen und in einer weiteren anschließenden Elektrik-Prüfung entdeckt und behoben werden.
- Durch die Erschütterung setzen sich die Fahrwerksteile, die bisher nicht weiter belastet wurden, was zu einer besseren Fahrwerkseinstellung führt.
- Das Setzverhalten einer Karosserie verspricht eine langfristig gute Türenfeinjustage.
- Klapper- und Vibrationsgeräusche können gut lokalisiert und reproduziert werden.
- Wird im Prüfstand mit eingeschaltetem Licht gefahren, können Frühausfälle von Lampen, die sonst eventuell erst beim Kunden auftreten, rechtzeitig entdeckt/provoziert werden.

Anstelle eines vorstehend beschriebenen Rollenprüfstands als Rüttelprüfstand ist es bei Fahrzeugherstellern auch bekannt, stichprobenartige Rütteltests im Freien auf Schlechtwegstrecken durchzuführen. Bei solchen im Freien stattfindenden Rüttelstreckenfahrten können mögliche Klapper- und Vibrationsgeräusche weniger gut als auf Rüttelprüfständen lokalisiert und reproduziert werden, wobei insbesondere Witterungseinflüsse zu berücksichtigen sind. Zudem besteht, während Rüttelstreckenfahrten die Gefahr von Beschädigungen am Fahrzeug und das Erfordernis, das Fahrzeug abschließend zu waschen.

Weiter sind in Fahrzeuge eingebaute Fahrstabilisierungseinrichtungen unter der Bezeichnung ESP (Elektronisches Stabilitäts Programm) bekannt, die mittels Messwerten von Quer- und/oder Längsbeschleunigungssensoren und/oder Gier-/Drehratensensoren und deren Auswertung selbsttätig das Fahrverhalten eines Fahrzeugs stabilisieren. Solche ESP-Systeme werden bereits serienmäßig in unterschiedliche Fahrzeugtypen eingebaut.

ESP-Systeme sind sicherheitskritische Einrichtungen, die insbesondere hinsichtlich der Funktion der eingesetzten Sensoren vor der Auslieferung eines Fahrzeugs zu überprüfen sind. Es ist bekannt, eine solche Funktionsprüfung mit einer sogenannten ESP-Prüffahrt über eine Doppel-S-Kurvenfahrt durchzuführen, bei der die eingebauten Sensoren aktivierbar und überprüfbar sind. Solche ESP-Prüffahrten sind aufwendig und kostenintensiv.

Aufgabe der Erfindung ist es, den Aufwand für eine Rüttelprüfung und eine ESP-Prüfung zu verringern.

Diese Aufgabe wird mit den Merkmalen des Anspruchs 1 gelöst.

Gemäß Anspruch 1 wird ein gattungsgemäßer Rollenprüfstand zu einem kombinierten ESP-/Rüttelprüfstand aufgebaut. Dazu ist eine Hubeinrichtung für das Fahrzeug vorgesehen mit der dieses von den Scheitelrollen abhebbar und in einen darüber liegenden Bereich gesteuert anhebbar ist. Zudem ist eine Kippeinrichtung für das Fahrzeug vorgesehen mit der dieses in seiner angehobenen Position definiert um eine Fahrzeugachse kippbar ist, wobei eine Aktivierung und Überprüfung von Quer- und/oder Längsbeschleunigungssensoren des ESP möglich wird. Die Kippsteuerung kann hier je nach den Gegebenheiten und den durchzuführenden Prüfungen hinsichtlich der Kippzeit und des Kippwinkels definiert vorgegeben werden.

Falls im ESP-System auch wenigstens ein Gier-/Drehratensensor enthalten ist, wird zudem eine Dreheinrichtung für das Fahrzeug vorgesehen, mit der dieses in seiner angehobenen Position gesteuert und definiert um eine Fahrzeughochachse gedreht bzw. geschwenkt wird, wobei eine Aktivierung und Überprüfung eines Gier-/Drehratensensors des ESP möglich ist. Auch hier kann die Drehsteuerung den Gegebenheiten und Prüfbedingungen hinsichtlich der Drehzeit und des Drehwinkels angepasst werden.

Ein solcher kombinierter ESP-/Rüttelprüfstand kann vorteilhaft zur serienmäßigen Prüfung des ESP-Systems und zudem zur akustischen Beurteilung des Fahrzeugs eingesetzt werden, wobei beide Prüfumfänge auf einem einzigen Prüfstand reproduzierbar durchgeführt werden können. Damit wird ein an sich bekannter Rüttelprüfstand in einer zusätzlichen Funktion als ESP-Prüfstand nutzbar mit Kostenvorteilen beim Prüfstandsaufbau, dem Platzbedarf und mit optimierten Taktzeiten am Montagebandende. Insbesondere ergeben sich diese Vorteile gegenüber einem Aufbau aus zwei separaten Prüfständen jeweils für eine Rüttelprüfung und eine ESP-Prüfung.

Mit den Merkmalen des Anspruchs 2 wird eine Ausbildung des Rollenprüf stands hinsichtlich seiner Funktion als Rüttelprüfstand beansprucht, wie sie an sich bereits bekannt ist. Vorteilhaft kann bei der Ausbildung eines kombinierten ESP-/Rüttelprüfstands auf bewährte Baueinheiten bekannter Rüttelprüfstände zurückgegriffen werden. Konkret sollen zwei in Querrichtung beabstandete mit einer Rollenabdeckung abdeckbare vordere Scheitelrollen an einer Vorder-Prüfstandsachse und entsprechend zwei hintere Scheitelrollen an einer Hinter-Prüfstandsachse angebracht sein. Den vorderen und/oder hinteren Scheitelrollen sind achsparallele höher liegende, vorzugsweise gesteuert anhebbare Sicherheitsrollen zugeordnet, mittels derer die Räder des Fahrzeugs auf den Scheitelrollen gehalten werden. Insbesondere bei Fahrzeugen mit Vorderradantrieb ist es zweckmäßig, solche Sicherheitsrollen im Bereich vor und hinter den Fahrzeug-Vorderrädern anzuordnen. Bei gesteuert anhebbaren Sicherheitsrollen sollen diese so angesteuert sein, dass sie auch bei Stromausfall in der angehobenen Position verbleiben und ein Fahrzeug sicher auf den Scheitelrollen halten. Weiter sollen seitliche Anlaufrollen verhindern, dass ein Fahrzeug seitlich von den Scheitelrollen läuft.

Grundsätzlich sind mehrere Ausführungsarten hinsichtlich der Drehung der Scheitelrollen möglich: Wenn ein Fahrer mittels des Fahrzeugantriebs auf den Scheitelrollen fährt, können diese freidrehend auf ihren zugeordneten Achsen angebracht sein. Da bei einem Fahrzeug mit Ausnahme von vierradangetriebenen Fahrzeugen nur jeweils zwei Räder auf einer Achse angetrieben sind, werden darüber nur die beiden zugeordneten Scheitelrollen angetrieben. Zur Simulation einer Schlechtwegstrecke sind jedoch auch die anderen Scheitelrollen und nicht angetriebenen Fahrzeugräder anzutreiben. Dazu wird gemäß Anspruch 3 eine Drehbewegungskopplung, insbesondere über einen Zahnriemen zwischen den auf unterschiedliche Rollachsen angebrachten Scheitelrollen vorgeschlagen.

In einer alternativen Ausbildung oder einer zusätzlichen gegebenenfalls umschaltbaren Funktion können die Scheitelrollen nach Anspruch 4 mit einem steuerbaren Antrieb drehangetrieben werden. Dies ermöglicht ein selbsttätiges Abarbeiten eines Rüttelprüfumfangs ohne Fahrer im Fahrzeug. Dazu können beispielsweise alle vier Scheitelrollen synchronisiert durch jeweils einem einer Scheitelrolle zugeordneten Antrieb durchgeführt werden. Gegebenfalls können auch die beiden Achsen angetrieben werden oder Scheitelrollen auf einer Achse angetrieben und mit den Scheitelrollen der anderen Achse drehbewegungsübertragend gekoppelt werden.

Nach Anspruch 5 werden vorteilhaft die Profile auf den Umfangsflächen der Scheitelrolle auswechselbar gestaltet, so dass je nach Ausbildung von Austauschprofilen unterschiedliche Schlechtwegeverhältnisse simulierbar sind.

In einer besonders bevorzugten Weiterbildung nach Anspruch 6 ist wenigstens eine Rollenachse mit den zugeordneten Scheitelrollen im Prüfstandsgestell in Längsrichtung gesteuert verschiebbar angeordnet. Damit ist eine Anpassung an unterschiedliche Radstände verschiedener Fahrzeugtypen durchführbar. Eine solche Einstellung kann gegebenenfalls auch automatisiert werden, wenn der Steuerung in an sich bekannter Weise Daten über einen Fahrzeugerkennungscode zur Erkennung eines bestimmten Fahrzeugtyps eingegeben werden. Zugleich kann über diese Einrichtung der Abstand von Radaufnahmen fahrzeugspezifisch eingestellt werden. Diese Radaufnahmen werden weiter unten in Verbindung mit der ESP-Prüfung näher beschrieben. Zudem kann mittels dieser Vorrichtung eine fahrzeugspezifische Positionsanpassung an die Position der Hubeinrichtung erfolgen, wobei auch diese Anpassungen automatisiert durchführbar sind.

In einer konstruktiv einfachen und überschaubaren Ausführung können die Hubeinrichtung und/oder die Kippeinrichtung und/oder die Dreheinrichtung mit einer Plattform verbunden sein. Auf dieser Plattform sind Radaufnahmen zum sicheren Halt eines Fahrzeugs nach einem Abheben von den Scheitelrollen angebracht. Das Fahrzeug wird dadurch in einer angehobenen Position auf der Plattform stehend, kippbar und/oder drehbar, wodurch die ESP-Sensoren aktivierbar und überprüfbar sind.

Als Hubeinrichtung kann nach Anspruch 8 auf eine bewährte vertikal ausfahrende Teleskopstützenanordnung, vorzugsweise in der Art eines gesteuert hydraulisch ausfahrbaren Hubkolbens zurückgegriffen werden, an dessen oberen Ende die Plattform über die Kippvorrichtung gehalten ist. Die Drehfunktion kann einfach dadurch erreicht werden, dass die Teleskopstütze auf einem gesteuert antreibbaren Drehteller, beispielsweise mit einer Drehkranzbetätigung, angebracht ist.

Alternativ oder zusätzlich kann auch jedem Fahrzeugrad eine Hubeinrichtung zugeordnet sein, wodurch das Fahrzeug gegenüber dem Prüfstandsgestell oder gegebenenfalls gegenüber der Plattform kippbar ist.

Je nach Anordnung und Ausrichtung der Kippeinrichtung können unterschiedliche Kippvorgänge über unterschiedlich ausgerichtete Kippachsen erzeugt werden. Gemäß Anspruch 10 ist es jedoch für einen Test der Quer- und/oder Längsbeschleunigungssensoren des ESP-Systems zweckmäßig und ausreichend, eine Fahrzeugkippung um eine Fahrzeuglängsachse und/oder eine Fahrzeugquerachse durchzuführen. Grundsätzlich können jedoch auch andere Prüfabläufe, insbesondere mit kombinierten Kipp- und Drehbewegungen durchgeführt werden.

Als Antriebe für die einzelnen Stelleinrichtungen des Prüfstands, insbesondere für die Hubeinrichtung, die Kippeinrichtung und die Dreheinrichtung können nach Anspruch 1, nach Zweckmäßigkeitserwägungen elektrische, hydraulische oder pneumatische Antriebe verwendet werden.

Ein ESP-Prüfumfang kann nach Anspruch 12 selbsttätig durchgeführt werden, indem die Hubeinrichtung, die Kippeinrichtung und die Dreheinrichtung mittels eines Prüfstandsrechners programmgesteuert angesteuert werden. Die Sensorwerte der damit aktivierten Quer- und Längsbeschleunigungssensoren sowie von Gierratensensoren werden als Istwerte dem Prüfstandsrechner zugeführt und dort mit vorgebbaren Sollwerten verglichen, worüber ein positives oder negatives Prüfergebnis festgestellt und protokolliert wird. Der Prüfstandsrechner kann zudem auch die Abfolge zwischen der Rüttelprüfung und ESP-Prüfung koordinieren und steuern. Weiter kann der Prüfstandsrechner weitere Ablauffunktionen steuern, beispielsweise eine Signallampe für die Prüfstandsein- und -ausfahrt.

Gemäß Anspruch 13 eignet sich ein solcher kombinierter ESP-/Rüttelprüfstand besonders für eine Integration am Montagebandende, wodurch beide Prüfumfänge schnell und sicher an allen hergestellten Fahrzeugen weitgehend automatisiert durchführbar sind.

Anhand einer Zeichnung wird die Erfindung näher erläutert.

Es zeigen:
- Fig. 1a: eine schematische Seitenansicht eines erfindungsgemäßen Rollenprüfstands, der für eine Rüttelprüfung hergerichtet ist,
- Fig. 1b: eine schematische Seitenansicht des Rollenprüfstands gemäß Fig. 1a, der für eine ESP-Prüfung hergerichtet ist,
- Fig. 2a: eine schematische Rückansicht des Rollenprüfstands, der für eine Rüttelprüfung hergerichtet ist,
- Fig. 2b: eine weitere schematische Rückansicht des Rüttelprüfstands, der für eine ESP-Prüfung hergerichtet ist,
- Fig. 3a: eine schematische Draufsicht auf den Rollenprüfstand, und
- Fig. 3b: eine weitere schematische Draufsicht auf den Rollenprüfstand mit einem mittels einem Drehteller um eine Hochachse verdrehten Fahrzeug.

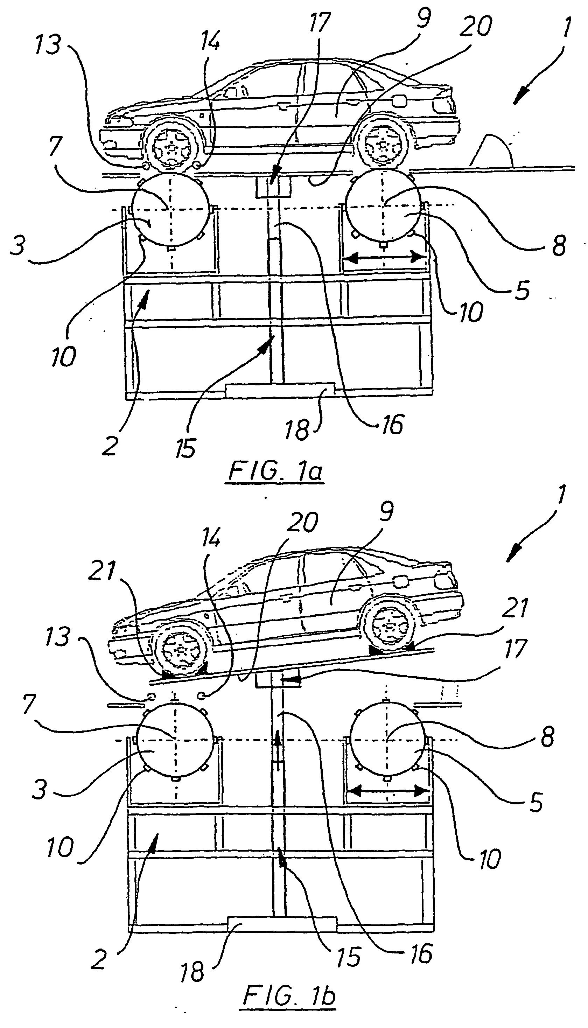

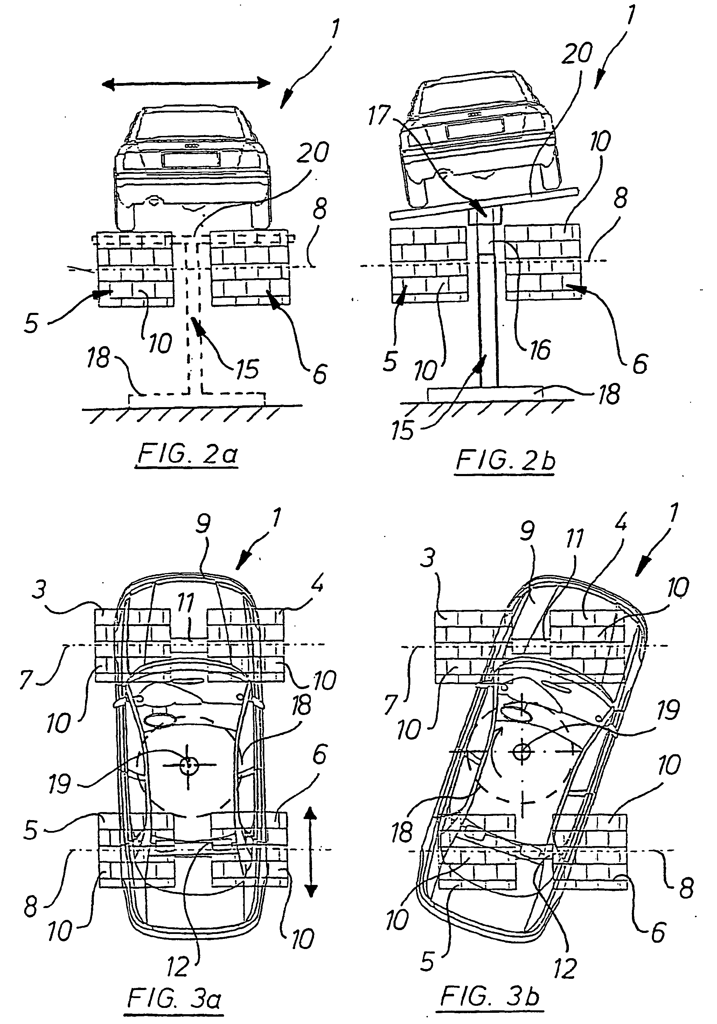

In der Fig. 1a ist schematisch eine Seitenansicht eines Rollenprüfstands 1 gezeigt, der ein Prüfstandsgestell 2 mit Anfahrflächen zu zwei in Querrichtung beabstandeten und mit einer Rollenabdeckung abdeckbaren, vorderen Scheitelrollen 3, 4 an einer Vorder-Prüfstandsachse 7 und entsprechend zwei hintere Scheitelrollen 5, 6 an einer Hinter-Prüfstandsachse 8 als drehbare Aufstandsrollen für Räder eines zu prüfenden mit einem Elektronischen Stabilitäts Programm ausgerüsteten Kraftfahrzeugs 1 aufweist, was insbesondere auch aus den Fig. 2a, 2b, 3a und 3b ersichtlich ist.

Aus diesen Figuren ist ferner ersichtlich, dass auf den Umfangsflächen der Scheitelrollen 3, 4, 5, 6 Profile 10, vorzugsweise wechselbare Austauschprofile unterschiedlicher Struktur, angeordnet sind, um damit eine Rüttelprüfung des Kraftfahrzeugs 9 durchführen zu können.

Wie dies insbesondere aus der Fig. 3a ersichtlich ist, sind die vorderen Scheitelrollen 3, 4 auf einer vorderen Rollenachse 11 gelagert, während die hinteren Scheitelrollen 5, 6 auf einer hinteren Rollenachse 12, die parallel zu der vorderen Rollenachse 11 ausgerichtet ist, gelagert sind. Um eine Schlechtwegstrecke zu simulieren, sind sämtliche Scheitelrollen 3, 4, 5, 6 anzutreiben, so dass vorzugsweise eine Drehbewegungskopplung über einen Zahnriemen zwischen den auf unterschiedlichen Rollenachsen 11, 12 angebrachten Scheitelrollen 3, 4, 5, 6 vorgesehen ist, was hier jedoch nicht dargestellt ist. Alternativ oder zusätzlich dazu kann für die Scheitelrollen 3, 4, 5, 6 aber auch wenigstens ein steuerbarer Antrieb vorgesehen sein, was hier ebenfalls nicht dargestellt ist.

Um eine Anpassung an unterschiedliche Radstände verschiedener Fahrzeugtypen einfach durchführen zu können, kann ferner vorgesehen sein, dass wenigstens eine der Rollenachsen 11, 12 mit den zugeordneten Scheitelrollen 3, 4, 5, 6 im Prüfstandsgestell 2 in Längsrichtung gesteuert verschiebbar angeordnet ist.

Wie dies weiter insbesondere den Fig. 1a und 1 b zu entnehmen ist, sind hier beispielsweise lediglich den vorderen Scheitelrollen 3, 4 zugeordnete, achsparallele, höherliegende Sicherheitsrollen 13, 14 vorgesehen, mittels denen die Räder des Kraftfahrzeugs 9 auf den vorderen Scheitelrollen 3, 4 und damit auch auf den hinteren Scheitelrollen 5, 6 gehalten werden. Zudem können, was hier allerdings nicht dargestellt ist, seitlich von den Scheitelrollen 3, 4 bzw. 5, 6 Anlaufrollen vorgesehen sein, die verhindern, dass ein Kraftfahrzeug seitlich von den Scheitelrollen 3, 4 bzw. 5, 6 läuft.

Mit derartigen vorderen und hinteren Scheitelrollen 3, 4, 5, 6 wird ein Rüttelprüfstand ausgebildet, bei dem über die Profile 10 eine Rüttelprüfung durchgeführt werden kann, wie dies beispielsweise in den Darstellungen der Fig. 1a und 2a gezeigt ist.

Wie dies aus den Figuren weiter ersichtlich ist, ist der Rollenprüfstand 1 zudem zu einem kombinierten ESP-/Rüttelprüfstand erweitert, wobei eine Hubeinrichtung 15 für das Kraftfahrzeug 9 vorgesehen ist, mit der dieses von den Scheitelrollen 3, 4, 5, 6 abhebbar und in einen darüberliegenden Bereich gesteuert anhebbar ist, wie dies beispielsweise aus der Fig. 1 b ersichtlich ist. Diese Hubeinrichtung 15 umfasst eine vertikal ausfahrbare Teleskopstütze 16, vorzugsweise in der Art eines gesteuert hydraulisch betätigbaren Hubkolbens, an deren oberem Ende eine Kippeinrichtung 17 für das Kraftfahrzeug 9 vorgesehen ist, mit der dieses in der durch die Hubeinrichtung 15 angehobenen Position gesteuert und definiert um eine Fahrzeugachse gekippt werden kann, wodurch eine Überprüfung von Quer- und/oder Längsbeschleunigungssensoren des Elektronischen Stabilitäts Programms möglich ist, wie dies beispielsweise in den Fig. 1 bund 2b dargestellt ist. Die Kippeinrichtung 17 ist dabei so ausgebildet, dass eine Fahrzeugkippung um eine Fahrzeuglängsachse, wie dies in der Fig. 2b gezeigt ist, und um eine Fahrzeugquerachse, wie dies in der Fig. 1 b gezeigt ist, möglich ist.

Wie dies insbesondere aus den Fig. 1a, 1 b und 2b ersichtlich ist, ist die Teleskopstütze 16 auf einem bodenseitigen, gesteuert antreibbaren Drehteller 18 als Dreheinrichtung angebracht, mit der das Kraftfahrzeug 9 in seiner angehobenen Position gesteuert und definiert um eine Fahrzeughochachse 19 gedreht werden kann, wie dies insbesondere aus der Fig. 3b ersichtlich ist, wodurch eine Aktivierung und Überprüfung eines Gier-/Drehratensensors des Elektronischen Stabilitäts Programms möglich ist.

An einem oberen Bereich der Teleskopstütze 16, an dem auch die Kippeinrichtung 17 angeordnet ist, ist ferner eine mit der Hubeinrichtung 15 anhebbare und mit der Kippeinrichtung 17 kippbare, das Kraftfahrzeug 9 tragende Plattform 20 vorgesehen, die Radaufnahmen 21 zum sicheren Halt eines Kraftfahrzeugs nach dem Abheben von den Scheitelrollen 3, 4, 5, 6 aufweist, wie dies insbesondere aus der Fig. 1 b ersichtlich ist.

Als Antriebe für die Hubeinrichtung 15, die Kippeinrichtung 17 und das Drehteller 18 können elektrische und/oder hydraulische und/oder pneumatische Antriebe verwendet werden.

Vorteilhaft werden für eine ESP-Prüfung die Hubeinrichtung 15, die Kippeinrichtung 17 und das Drehteller 18 mittels eines hier nicht dargestellten Prüfstandsrechners programmgesteuert angesteuert, wobei die Sensorwerte der damit aktivierten Quer- und/oder Längsbeschleunigungssensoren sowie von Gierratensensoren als Istwerte dem Prüfstandsrechner zugeführt werden und dort mit vorgebbaren Sollwerten verglichen werden, worauf ein positives oder negatives Prüfergebnis festgestellt und protokolliert wird.

## Patentansprüche

1. ESP-Rüttel-Prüfstand,
mit einem Prüfstandsgestell (2) mit Anfahrflächen zu drehbaren Scheitelrollen (3-6) an zwei beabstandeten, parallelen Rollenachsen (11,12) als Aufstandsrollen für entsprechend drehende Räder eines zu prüfenden mit einem Elektronischen Stabilitäts Programm (ESP) ausgerüsteten Kraftfahrzeugs, mit Profilen (10) auf den Umfangsflächen der Scheitelrollen zur Simulation einer Schlechtwegstrecke und zur Durchführung einer Rüttelprüfung eines Fahrzeugs, wobei
- eine Hubeinrichtung (15) für das Fahrzeug (9) vorgesehen ist, mit der dieses von den Scheitelrollen (3, 4, 5, 6) abhebbar und in einen darüberliegenden Bereich gesteuert anhebbar ist,
- eine Kippeinrichtung (17) für das Fahrzeug (9) vorgesehen ist, mit der dieses in seiner angehobenen Position gesteuert und definiert um eine Fahrzeugachse kippbar ist zur Aktivierung und Überprüfung von Quer- und/oder Längsbeschleunigungssensoren des ESP, und/oder
- eine Dreheinrichtung (18) für das Fahrzeug (9) vorgesehen ist, mit der dieses in seiner angehobenen Position gesteuert und definiert um eine Fahrzeughochachse drehbar ist zur Aktivierung und Überprüfung eines Gier-/Drehratensensors des ESP.

2. ESP-Rüttel-Prüfstand nach Anspruch 1, **dadurch gekennzeichnet,**
**dass** zwei in Querrichtung beabstandete mit einer Rollenabdeckung abdeckbare, vordere Scheitelrollen (3, 4) an einer Vorder-Prüfstandsachse (7) und entsprechend zwei hintere Scheitelrollen (4, 5) an einer Hinter-Prüfstandsachse (8) angebracht sind,
**dass** den vorderen und/oder hinteren Scheitelrollen (3, 4, 5, 6) achsparallele höher liegende Sicherheitsrollen (13, 14) zugeordnet sind mittels derer Räder des Fahrzeugs (9) auf den Scheitelrollen (3, 4, 5, 6) gehalten werden, wobei vorzugsweise Sicherheitsrollen (13, 14) im Bereich vor und hinter Fahrzeug-Vorderrädern angeordnet sind, und
**dass** zudem seitlich von den Scheitelrollen (3, 4, 5, 6) Anlaufrollen vorgesehen sind, um zu verhindern, dass ein Fahrzeug (9) seitlich von den Scheitelrollen (3, 4, 5, 6) läuft.

3. ESP-Rüttel-Prüfstand nach Anspruch 1 oder 2, **dadurch gekennzeichnet, dass** Scheitelrollen (3, 4, 5, 6) auf unterschiedlichen Rollenachsen (11, 12) drehbewegungsübertragend gekoppelt sind, vorzugsweise mittels eines Zahnriemens gekoppelt sind.

4. ESP-Rüttel-Prüfstand nach einem der Ansprüche 1 bis 3, **dadurch gekennzeichnet, dass** für die Scheitelrollen (3, 4, 5, 6) wenigstens ein steuerbarer Antrieb vorgesehen ist.

5. ESP-Rüttel-Prüfstand nach einem der Ansprüche 1 bis 4, **dadurch gekennzeichnet, dass** die Profile (10) auf den Umfangsflächen der Scheitelrollen (3, 4, 5, 6) als wechselbare Austauschprofile unterschiedlicher Struktur ausgebildet sind.

6. ESP-Rüttel-Prüfstand nach einem der Ansprüche 1 bis 5, **dadurch gekennzeichnet, dass** wenigstens eine Rollenachse (11, 12) mit den zugeordneten Scheitelrollen (3, 4, 5, 6) im Prüfstandsgestell (2) in Längsrichtung gesteuert verschiebbar angeordnet ist.

7. ESP-Rüttel-Prüfstand nach einem der Ansprüche 1 bis 6, **dadurch gekennzeichnet, dass** die Hubeinrichtung (15) und/oder die Kippeinrichtung (17) und/ oder die Dreheinrichtung (18) mit einer damit anhebbaren und/oder kippbaren und/oder drehbaren, ein Fahrzeug (9) tragenden Plattform (20) verbunden sind, wobei die Plattform (20) Radaufnahmen (21) zum sicheren Halt eines Fahrzeugs (9) nach dem Abheben von den Scheitelrollen (3, 4, 5, 6) aufweist.

8. ESP-Rüttel-Prüfstand nach Anspruch 7, **dadurch gekennzeichnet, dass** die Hubeinrichtung (15) eine vertikal ausfahrbare Teleskopstütze (16), vorzugsweise einen gesteuert hydraulisch betätigbaren Hubkolben umfasst, an dessen oberem Ende die Plattform (20) mittels der Kippeinrichtung (17) gelagert ist, und
dass die Teleskopstütze (16) auf einem bodenseitigen, gesteuert antreibbaren Drehteller (18) als Dreheinrichtung angebracht ist.

9. ESP-Rüttel-Prüfstand nach einem der Ansprüche 1 bis 8, **dadurch gekennzeichnet, dass** jedem Fahrzeugrad eine Hubeinrichtung (15) zugeordnet ist.

10. ESP-Rüttel-Prüfstand nach einem der Ansprüche 1 bis 9, **dadurch gekennzeichnet, dass** die Kippeinrichtung (17) so ausgebildet ist, dass eine Fahrzeugkippung um eine Fahrzeuglängsachse und/oder Fahrzeugquerachse durchführbar ist.

11. ESP-Rüttel-Prüfstand nach einem der Ansprüche 1 bis 10, **dadurch gekennzeichnet, dass** als Antriebe für die Hubeinrichtung (15) und/oder Kippeinrichtung (17) und/oder Dreheinrichtung (18) elektrische und/oder hydraulische und/oder pneumatische Antriebe verwendet sind.

12. ESP-Rüttel-Prüfstand nach einem der Ansprüche 1 bis 11, **dadurch gekennzeichnet,**
**dass** für eine ESP-Prüfung die Hubeinrichtung (15), die Kippeinrichtung (17) und die Dreheinrichtung (18) mittels eines Prüfstandsrechners programmgesteuert angesteuert werden, und
**dass** die Sensorwerte der damit aktivierten Quer- und Längsbeschleunigungssensoren sowie von Gierratensensoren als Istwerte dem Prüfstandsrechner zugeführt werden, und dort mit vorgebbaren Sollwerten verglichen werden, worauf ein positives oder negatives Prüfergebnis feststellt und protokolliert wird.

13. ESP-Rüttel-Prüfstand nach einem der Ansprüche 1 bis 12, **dadurch gekennzeichnet, dass** der Rollenprüfstand (1) als kombinierter ESP-/Rüttelprüfstand am Montagebandende eines Fahrzeugherstellers integriert ist.

## Claims

1. ESP vibration dynamometer, comprising a dynamometer frame (2) with approach ramps to rotatable top rollers (3-6) on two parallel roller axles (11, 12) disposed at a distance from one another serving as contact rollers for correspondingly rotating wheels of a motor vehicle to be tested, provided with an electronic stability program (ESP), with profiles (10) on the circumferential surfaces of the top rollers in order to simulate a poor road surface and in order to carry out vibration testing of a vehicle, wherein
- a lifting device (15) is provided for the vehicle (9), by means of which the vehicle can be lifted off the top rollers (3, 4, 5, 6) and raised in a controlled manner into a region situated thereabove,
- a tilting device (17) is provided for the vehicle (9), by means of which the vehicle can be tilted about a vehicle axis in a controlled and defined manner in its raised position in order to activate and check transverse and/or longitudinal acceleration sensors of the ESP, and/or
- a rotating device (18) is provided for the vehicle (9), by means of which the vehicle can be rotated about a vertical vehicle axis in a controlled and defined manner in its raised position in order to activate and check a yaw sensor of the ESP.

2. ESP vibration dynamometer according to claim 1, **characterised in that** two front top rollers (3, 4) which are disposed at a distance from one another in the transverse direction and can be covered by a roller cover are mounted on a front axle (7) of the dynamometer and two rear top rollers (4, 5) are mounted in a corresponding manner on a rear axle (8) of the dynamometer, that axially parallel safety rollers (13, 14) disposed at a higher level and by means of which wheels of the vehicle (9) are held on the top rollers (3, 4, 5, 6) are associated with the front and/or rear top rollers (3, 4, 5, 6), safety rollers (13, 14) preferably being arranged in the region in front of and behind front wheels of the vehicle, and that contact rollers are additionally provided laterally of the top rollers (3, 4, 5, 6) in order to prevent a vehicle (9) from running laterally of the top rollers (3, 4, 5, 6).

3. ESP vibration dynamometer according to claim 1 or claim 2, **characterised in that** top rollers (3, 4, 5, 6) are coupled to different roller axles (11, 12), preferably by means of a toothed belt, in such a manner that they transmit rotary motion.

4. ESP vibration dynamometer according to one of claims 1 to 3, **characterised in that** at least one controllable drive is provided for the top rollers (3, 4, 5, 6).

5. ESP vibration dynamometer according to one of claims 1 to 4, **characterised in that** the profiles (10) on the circumferential surfaces of the top rollers (3, 4, 5, 6), are designed as exchangeable profiles having different structures.

6. ESP vibration dynamometer according to one of claims 1 to 5, **characterised in that** at least one roller axle (11, 12) with the associated top rollers (3, 4, 5, 6) is arranged in the dynamometer frame (2) in such a manner that it can be displaced in a controlled manner in the longitudinal direction.

7. ESP vibration dynamometer according to one of claims 1 to 6, **characterised in that** the lifting device (15) and/or the tilting device (17) and/or the rotating device (18) are connected to a platform (20) carrying a vehicle (9) which can be raised and/or tilted and/or rotated thereby, the platform (20) having wheel receivers (21) for holding a vehicle (9) securely once it has been lifted off the top rollers (3, 4, 5, 6).

8. ESP vibration dynamometer according to claim 7, **characterised in that** the lifting device (15) includes a vertically extendable telescopic support (16), preferably a reciprocating piston which can be actuated hydraulically in a controlled manner, at the upper end of which the platform (20) is supported by means of the tilting device (17), and that the telescopic support (16) is mounted on a bottom rotary table (18) which can be driven in a controlled manner serving as the rotating device.

9. ESP vibration dynamometer according to one of claims 1 to 8, **characterised in that** a lifting device (15) is associated with each vehicle wheel.

10. ESP vibration dynamometer according to one of claims 1 to 9, **characterised in that** the tilting device (17) is designed in such a manner that the vehicle can be tilted about a longitudinal vehicle axis and/or transverse vehicle axis.

11. ESP vibration dynamometer according to one of claims 1 to 10, **characterised in that** electrical and/or hydraulic and/or pneumatic drives are used as the drives for the lifting device (15) and/or tilting device (17) and/or rotating device (18).

12. ESP vibration dynamometer according to one of claims 1 to 11, **characterised in that** the lifting device (15), the tilting device (17) and the rotating device (18) are actuated in a program-controlled manner by means of a dynamometer computer for ESP testing and that the sensor values of the transverse and longitudinal acceleration sensors activated thereby and of yaw sensors are supplied as actual values to the dynamometer computer, where they are compared with predetermined setpoints, after which a positive or negative test result is determined and recorded.

13. ESP vibration dynamometer according to one of claims 1 to 12, **characterised in that** the roller dynamometer (1) is integrated as a combined ESP/vibration dynamometer into the end of the assembly line of a vehicle manufacturer.

## Revendications

1. Banc d'essai de vibration avec ESP,
comprenant un bâti de banc d'essai (2) avec des surfaces d'accrochage à des rouleaux culminants rotatifs (3-6) sur deux axes de rouleau (11, 12) parallèles, espacés, comme rouleaux de contact pour les roues en rotation de manière correspondante d'un véhicule automobile destiné à être contrôlé, équipé d'un programme électronique de stabilité (ESP), comprenant des profilés (10) sur les surfaces périphériques des rouleaux culminants pour simuler une chaussée en mauvais état et pour réaliser un essai de vibration d'un véhicule,
- un dispositif d'élévation (15) pour le véhicule (9) étant prévu, avec lequel ledit véhicule peut être enlevé par les rouleaux culminants (3, 4, 5, 6) et soulevé de façon contrôlée dans une zone située au-dessus,
- un dispositif de basculement (17) pour le véhicule (9) étant prévu, avec lequel ledit véhicule dans sa position soulevée peut être basculé de façon contrôlée et définie autour d'un axe de véhicule afin d'activer et de contrôler les capteurs d'accélération transversale et/ou longitudinale de l'ESP, et/ou
- un dispositif de rotation (18) pour le véhicule (9) étant prévu, avec lequel ledit véhicule dans sa position soulevée peut être amené en rotation d'une façon contrôlée et définie autour d'un axe vertical du véhicule afin d'activer et de contrôler un capteur de vitesse d'embardée/rotative de l'ESP.

2. Banc d'essai de vibration avec ESP selon la revendication 1, **caractérisé**
**en ce que** deux rouleaux culminants avant (3, 4), espacés dans la direction transversale, pouvant être recouverts d'un couvercle de rouleau, sont montés sur un axe avant de banc d'essai (7) et de manière correspondante deux rouleaux culminants arrière (4, 5) sur un axe arrière de banc d'essai (8),
**en ce que** des rouleaux de sécurité (13, 14) situés plus haut et parallèles à l'axe sont associés aux rouleaux culminants avant et/ou arrière (3, 4, 5, 6), rouleaux de sécurité au moyen desquels les roues du véhicule (9) sont maintenues sur les rouleaux culminants (3, 4, 5, 6), les rouleaux de sécurité (13, 14) étant disposés de préférence dans la zone à l'avant et à l'arrière des roues avant du véhicule, et
**en ce que** des rouleaux d'arrêt sont prévus en outre à côté des rouleaux culminants (3, 4, 5, 6), afin d'empêcher qu'un véhicule (9) roule latéralement à partir des rouleaux culminants (3, 4, 5, 6).

3. Banc d'essai de vibration avec ESP selon la revendication 1 ou 2, **caractérisé en ce que** les rouleaux culminants (3, 4, 5, 6) sont couplés par transmission du mouvement rotatif sur des axes de rouleaux (11, 12) différents, de préférence couplés au moyen d'une courroie dentée.

4. Banc d'essai de vibration avec ESP selon l'une des revendications 1 à 3, **caractérisé en ce qu'**au moins un entraînement commandable est prévu pour les rouleaux culminants (3, 4, 5, 6).

5. Banc d'essai de vibration avec ESP selon l'une des revendications 1 à 4, **caractérisé en ce que** les profilés (10) sont conçus sur les surfaces périphériques des rouleaux culminants (3, 4, 5, 6) comme des profilés de remplacement interchangeables présentant une structure différente.

6. Banc d'essai de vibration avec ESP selon l'une des revendications 1 à 5, **caractérisé en ce qu'**au moins un axe de rouleau (11, 12) comprenant les rouleaux culminants (3, 4, 5, 6) associés est disposé dans le bâti de banc d'essai (2) de manière à pouvoir se déplacer de façon contrôlée dans la direction longitudinale.

7. Banc d'essai de vibration avec ESP selon l'une des revendications 1 à 6, **caractérisé en ce que** le dispositif d'élévation (15) et/ou le dispositif de basculement (17) et/ou le dispositif de rotation (18) sont reliés à une plate-forme (20) portant un véhicule (9) pouvant être ainsi soulevée et/ou basculée et/ou amenée en rotation, la plate-forme (20) comprenant des logements de roue (21) pour un maintien sûr d'un véhicule (9) après qu'il ait été levé par les rouleaux culminants (3, 4, 5, 6).

8. Banc d'essai de vibration avec ESP selon la revendication 7, **caractérisé en ce que** le dispositif d'élévation (15) comporte un support télescopique (16) pouvant être sorti dans le sens vertical, de préférence un piston élévateur pouvant être actionné par une commande hydraulique, piston sur l'extrémité supérieure duquel la plate-forme (20) est montée au moyen du dispositif de basculement (17), et
**en ce que** le support télescopique (16) est fixé sur un plateau tournant (18) côté sol, pouvant être entraîné de façon contrôlée, servant de dispositif de rotation.

9. Banc d'essai de vibration avec ESP selon l'une des revendications 1 à 8, **caractérisé en ce qu'**à chaque roue du véhicule est associé un dispositif d'élévation (15).

10. Banc d'essai de vibration avec ESP selon l'une des revendications 1 à 9, **caractérisé en ce que** le dispositif de basculement (17) est conçu de sorte qu'un basculement du véhicule peut être réalisé autour d'un axe longitudinal du véhicule et/ou d'un axe transversal du véhicule.

11. Banc d'essai de vibration avec ESP selon l'une des revendications 1 à 10, **caractérisé en ce que** des entraînements électriques et/ou hydrauliques et/ou pneumatiques sont utilisés comme entraînements pour le dispositif d'élévation (15) et/ou le dispositif de basculement (17) et/ou le dispositif de rotation (18).

12. Banc d'essai de vibration avec ESP selon l'une des revendications 1 à 11, **caractérisé**
**en ce que** le dispositif d'élévation (15), le dispositif de basculement (17) et le dispositif de rotation (18) sont commandés par programme au moyen d'un calculateur de banc d'essai pour contrôler l'ESP, et
**en ce que** les valeurs de capteur des capteurs d'accélération transversale et longitudinale de ce fait activés ainsi que par les capteurs de vitesse d'embardée sont amenées en tant que valeurs effectives au calculateur du banc d'essai, et comparées à cet endroit aux valeurs théoriques pouvant être prédéterminées, sur quoi un résultat positif ou négatif de l'essai est établi et constaté par procès-verbal.

13. Banc d'essai de vibration avec ESP selon l'une des revendications 1 à 12, **caractérisé en ce que** le banc d'essai à rouleaux (1) est intégré comme banc d'essai de vibration avec ESP combiné à l'extrémité de la chaîne de montage d'un fabricant de véhicule.
